(19) **Europäisches Patentamt / European Patent Office / Office européen des brevets**

(11) **EP 2 099 095 B1**

(12) # EUROPÄISCHE PATENTSCHRIFT

(45) Veröffentlichungstag und Bekanntmachung des Hinweises auf die Patenterteilung:
**20.11.2013 Patentblatt 2013/47**

(51) Int Cl.:
*H01Q 3/10* (2006.01)   *H01Q 3/16* (2006.01)
*H01Q 3/20* (2006.01)   *G01S 13/89* (2006.01)
*G01S 13/42* (2006.01)

(21) Anmeldenummer: **09002939.8**

(22) Anmeldetag: **02.03.2009**

(54) **Verwendung einer Vorrichtung zur zweidimensionalen Abbildung von Szenen durch Mikrowellen-Abtastung**

Use of a device for two-dimensional imaging of scenes using microwaves

Utilisation d'un dispositif de représentation bidimensionnelle de scènes à l'aide d'un balayage à micro-ondes

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **06.03.2008 DE 102008013066**

(43) Veröffentlichungstag der Anmeldung:
**09.09.2009 Patentblatt 2009/37**

(73) Patentinhaber: **Deutsches Zentrum für Luft- und Raumfahrt e.V.**
**51147 Köln (DE)**

(72) Erfinder:
• **Peichl, Markus Dr.**
**82131 Gauting (DE)**
• **Dill, Stephan**
**80339 München (DE)**
• **Jirousek, Matthias**
**82319 Starnberg (DE)**
• **Berthel, Dominik**
**97357 Stadelschwarzach (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
EP-A- 0 514 886          WO-A-96/17403
WO-A-02/066998          WO-A-2007/028472
US-A1- 2006 017 605

• **C.A. MARTIN, J.A. LOVBERG ET AL.: "High resolution passive millimeter-wave security screening using few amplifiers" PASSIVE MILLIMETER-WAVE IMAGING TECHNOLOGY X, Bd. 6548, 13. April 2007 (2007-04-13), Seiten 654806-1-654806-10, XP002529862 Orlando, FL, USA**
• **DATABASE COMPENDEX [Online] ENGINEERING INFORMATION, INC., NEW YORK, NY, US; DILL S ET AL: "Study of passive MMW personnel imaging with respect to suspicious and common concealed objects for security applications" XP002529863 Database accession no. E20085111799383 & PROCEEDINGS OF SPIE - THE INTERNATIONAL SOCIETY FOR OPTICAL ENGINEERING - MILLIMETRE WAVE AND TERAHERTZ SENSORS AND TECHNOLOGY 2008 SPIE US, Bd. 7117, 2008,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft die Verwendung einer Vorrichtung zur zweidimensionalen Abbildung von Szenen, z.B. von Gelände, Objekten oder Personen, durch kontinuierliche Mikrowellen-Abtastung mittels einer vollmechanischen, beweglichen, als Zweireflektor-Antenne ausgebildeten Reflektor-Richtantennenanordnung, die aus einem rotationssymmetrischen Hauptreflektor, einer Primärstrahleranordnung, die aus einem oder mehreren Primärstrahlern besteht und in der mit der optischen Achse der Richtantennenanordnung zusammenfallenden Symmetrieachse des Hauptreflektors angeordnet ist, und einem relativ zum Hauptreflektor klein bemessenen, rotationssymmetrischen Subreflektor besteht, dessen Symmetrieachse in Bezug auf die optische Achse der Richtantennenanordnung geneigt ist, wobei erste Antriebsmittel zur Ausübung einer Rotation des in Bezug auf die optische Achse der Richtantennenanordnung geneigten Subreflektors in dessen Scheitelpunkt um die optische Achse der Richtantennenanordnung und zweite Antriebsmittel zur Ausübung einer Bewegung der gesamten Richtantennenanordnung in einer zumindest angenähert senkrecht zur Richtung der optischen Achse der Richtantennenanordnung verlaufenden Richtung vorgesehen sind und wobei empfangsseitig eine Auswerteeinrichtung zur Erstellung eines Bildes der Szene aus den empfangenen Mikrowellen vorgesehen ist.

Passive Abbildungssysteme im Mikrowellenbereich (1 - 300GHz), sogenannte MW-Radiometer, sind hochempfindliche und frequenzselektive Leistungsmessgeräte, mit deren Hilfe sich das natürliche thermische Strahlungsverhalten von Materie mit einer physikalischen Temperatur größer 0° Kelvin erfassen lässt. Die thermische Strahlung wird in Helligkeitstemperaturen ausgedrückt.

Wird nun zur Messung der Helligkeitstemperaturverteilung eine räumlich hochauflösende Antenne oder Antennenstruktur verwendet, so kann diese Verteilung ortsabhängig bestimmt und damit auch bildhaft erfasst werden. Die Größe der Antenne bzw. Antennenstruktur bestimmt dabei bekanntermaßen die räumliche Auflösung, die im Wesentlichen durch die Breite des Hauptmaximums des Antennendiagramms charakterisiert wird. Zur Bilderzeugung kann nun das Antennendiagramm prinzipiell mechanisch oder elektronisch über die zu beobachtende Szene geschwenkt werden. Die Bildaufnahmedauer für eine entsprechende Bildqualität wird dabei durch die abzubildende Szenengröße, die räumliche Auflösung, die mögliche Verweildauer für eine einzelne Auflösungszelle und die Empfindlichkeit des Radiometerempfängers bestimmt. Können mehrere Empfänger simultan verwendet werden, so ist eine entsprechende Reduzierung der Aufnahmedauer möglich.

In gleicher Weise kann auch ein aktives Abbildungssystem, d.h. ein Radar, betrieben werden, wobei in jeder Position des Antennendiagramms ein Signal gesendet und wieder empfangen wird. Somit kann zusätzlich zur lateralen Rückstreuquerschnittsverteilung die entsprechende Entfernungsinformation mit erfasst werden.

Die bisher diesbezüglich entwickelten Vorrichtungen nutzen zur zweidimensionalen Abbildung von Szenen entweder vollmechanische oder vollelektronische Schwenkverfahren oder aber Mischformen aus diesen beiden Schwenkverfahren. Meistens muss für eine hinreichende räumliche Auflösung im Millimeterwellenbereich (z.B. > 30 GHz) gearbeitet werden.

Mit den bisher bekannten vollmechanischen Systemen werden für eine ausreichende Bildgröße keine genügend hohen Bildraten  (z.B. im Bereich von 1 Hz oder besser) mit hinreichender räumlicher Auflösung (z.B. 0,5° Winkelauflösung) und Empfindlichkeit (z.B. 1 K) erreicht. Meistens müssen große Antennenstrukturen mechanisch schnell bewegt werden, was zwangsläufig zu Massenträgheitsproblemen führt. Dadurch sind grundsätzliche Grenzen für derartige Verfahren frühzeitig erreicht (z.B. Winkelauflösung > 1°, Bildraten << 1 Hz, Empfindlichkeit > 1 K). Eine hohe Bildrate bedingt bei den hierzu bekannten Verfahren eine geringe Winkelauflösung und umgekehrt.

Es ist also festzustellen, dass die bisherigen vollmechanischen Abbildungssysteme im Mikro-/Millimeterwellen-Bereich nicht in der Lage sind, eine hohe räumliche Auflösung bei gleichzeitig hoher Bildrate und ausreichender Empfindlichkeit zu liefern. Ein vollmechanisch arbeitendes Abbildungsabtastsystem ist z.B. aus dem Artikel von Martin C.A. et al.: "High-resolution passive millimeter-wave security screening using few amplifiers", SPIE Defense & Security Symposium, Passive MMW Imaging Technology X, Orlando, FL, USA, 09.-13. April 2007, Proceedings of the SPIE, Volume 6548, Seiten 654806 ff. bekannt.

Vollelektronische zweidimensionale Schwenkvarianten gibt es derzeit nur in wenigen Ausführungsformen. Anwendbare Verfahren sind das Phased-Array-Prinzip, das Verfahren der Apertursynthese, das Focal-Plane-Array-Prinzip oder allgemein Verfahren mit "Digital Beamforming". Allen Verfahren gemein ist die Notwendigkeit von vielen Antennnen- bzw. Empfängerelementen (oder zumindest Teilen davon), die zusätzlich kompakt integriert werden müssen. Neben dem zusätzlichen Hardware-Aufwand sind oft Einschränkungen in der Gesichtsfeldgröße und der Empfindlichkeit sowie Abtastprobleme in Kauf zu nehmen. Neben erhöhtem Leistungsverbrauch, erhöhter Masse und Schwierigkeiten  bei der Verlustwärmeabführung ist häufig ein immenses Datenaufkommen zu verarbeiten.

Ferner ist die Bildrekonstruktion aus den Messdaten und die Kalibrierung dieser Systeme sehr aufwändig, da durch die Vielzahl von Subsystemen die Komplexität möglicher Fehlerquellen steigt, die aber korrigiert werden müssen. Ebenso ist der Ausfall einzelner Subsysteme aufgrund der Komplexität nicht ungewöhnlich. Dennoch sind auf diese Weise hohe Bildraten und räumliche Auflösungen sowie moderate Empfindlichkeiten möglich (z.B. einige Hertz und << 0,5° und < 1 K). Meist ist aber für solche Systeme ein großer technischer Aufwand erforderlich, der mit hohen Kosten verbunden ist. Ein vollelektronisch arbeitendes Abbildungssystem ist z.B. aus WO 2005/085903 A1 bekannt.

Am häufigsten werden derzeit hybride Konzepte verfolgt, bei denen ein Teil der Strahlschwenkung mechanisch und ein weiterer Teil elektronisch bewerkstelligt werden. Dies verringert zwar den Hardware-Aufwand, jedoch wird immer noch eine größere Anzahl an Teilsystemen (Antennen, Empfänger) benötigt. Neben den zuvor genannten Schwierigkeiten bei vollelektronischen Systemen können hier zusätzlich Probleme bei der Anpassung der Teilbilder auftreten. Mit dennoch hohem Aufwand trotz hybrider Technik kann aber auch eine hohe Abbildungsgüte bei Bildrate, räumlicher Auflösung und Empfindlichkeit erreicht werden (z.B. 25 Hz und 0,2° und < 2 K). Ein hybrides Abbildungssystem ist z.B. aus WO 2005/017559 A2 bekannt.

Es ist mithin in diesem Zusammenhang festzustellen, dass vollelektronische Abbildungssysteme oder Hybridsysteme mit mechanischer und elektronischer Richtdiagrammschwenkung im Mikro-/Millimeterwellen-Bereich zwar eine hohe räumliche Auflösung bei gleichzeitig hoher Bildrate und ausreichender Empfindlichkeit zumindest teil- oder näherungsweise liefern können, wozu jedoch ein hoher Aufwand an Hardware, Datenerfassung und Bildverarbeitung notwendig ist.

Insbesondere ist die Kalibrierung und Fehlerkorrektur der Systeme mit Schwierigkeiten verbunden, da viele Teilsysteme miteinander in Einklang zu bringen sind. Der höhere Hardware-Aufwand äußert sich deutlich in Kosten und Gewicht und dem Auftreten von hoher Verlustleistung. Ferner ist für viele Systemlösungen ein vollpolarimetrischer Betrieb schwierig und aufwändig oder gar unmöglich.

Häufig werden derzeit auch Systeme bei Frequenzen im Sub-Millimeter- und THz-Bereich (> 300 GHz) vorgeschlagen, da dort sehr viel kleinere Wellenlängen und damit eine höhere räumliche Auflösung bei gleicher Antennengröße erreicht werden. Solche Systeme haben jedoch gegenüber dem klassischen Millimeterwellenbereich ($\leq$ 300 GHz) die Nachteile geringerer Eindringtiefe, höherer atmosphärischer Dämpfung, schlechterer Rauschzahlen und höherem technologischen Aufwand der Empfänger (z.B. Kühlung), was deren Anwendungsgebiete einschränkt. Ein im THz-Bereich arbeitendes Abbildungssystem ist z.B. aus US 6 943 742 B2 bekannt.

Aus WO 2007/028472 A1 sind ein Verfahren und eine Vorrichtung zur Abbildung von Prüfobjekten mittels elektromagnetischer Wellen, insbesondere zur Kontrolle von Personen auf verdächtige Gegenstände hin, bekannt. Hierbei wird das Prüfobjekt mit elektromagnetischen Wellen "beleuchtet". Die vom Prüfobjekt rückgestreuten Wellen werden empfangen und für eine bildhafte Darstellung des Prüfobjekts nach dem Prinzip der synthetischen Apertur (SAR) ausgewertet. Die synthetische Apertur wird dadurch erzeugt, dass die von einem Primärstrahler einer Zweireflektor-Antenne ausgestrahlten Wellen zunächst mittels eines Subreflektors gebündelt werden, wobei die Stelle höchster Bündelung, also der Fokussierungsfleck, auf einem rotationssymmetrischen, kegelförmigen Hauptreflektor entlang eines Kreises bewegt wird. Die Kreisbewegung wird durch den schräggestellten rotierenden Subreflektor erzeugt. Die Stelle höchster Bündelung, also der Fokussierungsfleck auf dem kegelförmigen Hauptreflektor hat eine so geringe Ausdehnung, dass sie als virtuelle Antenne angesehen werden kann, die im Fernfeld ein Strahlenbündel mit großem divergierendem Öffnungswinkel erzeugt. Dieser große divergierende Öffnungswinkel sorgt mit Hilfe von zu prozessierenden SAR-Algorithmen für die erforderliche Auflösung. Der Antennenstrahl mit dem großen Öffnungswinkel tastet das Prüfobjekt kreisförmig ab. Das gesamte Radar-Antennensystem wird noch zusätzlich linear bewegt, so dass das Prüfobjekt insgesamt über seine Ausdehnung zweidimensional abgetastet wird. Von Bedeutung bei diesem bekannten Abbildungsverfahren ist die Anwendung eines zweidimensionalen SAR-Verfahrens, das sich durch die Verwendung einer bewegbaren virtuellen Antenne realisieren lässt. Voraussetzung ist somit immer ein aktives Abbildungssystem mit Mikrowellen-Sender und -Empfänger entsprechend dem SAR-Radarprinzip. Passive Abbildung nach dem Prinzip des sogenannten Mikrowellen-Radiometers ist mit diesem bekannten Verfahren nicht möglich. Von Nachteil sind bei diesem bekannten Abbildungsverfahren auch insbesondere der hohe rechnerische Prozessierungsaufwand und der Kohärenzaufwand, die beide bei einer SAR-Auswertung stets erforderlich sind. Wichtig bei dieser bekannten Abbildungsvorrichtung ist also, dass der Fokussierungsfleck auf dem Hauptreflektor zu liegen kommt und dass von dort aus für das Fernfeld ein Strahlenbündel mit großem Öffnungswinkel ausgeht. Dieses weit geöffnete Strahlenbündel ist für die beim bekannten Verfahren vorgesehene SAR-Auswertung unabdingbar.

Der Erfindung liegt die Aufgabe zu Grunde, eine Verwendung einer Vorrichtung mit einer Zweireflektor-Richtantennenanordnung anzugeben, mit deren Hilfe mittels aktiver oder passiver Mikrowellenabtastung große Gesichtsfelder und damit Szenen in kurzer Zeit und mit akzeptabler Bildqualität ohne den bei einer SAR-Auswertung erforderlichen hohen Prozessierungs- und Kohärenzaufwand bei Verwendung möglichst weniger, einfach aufgebauter Bauelemente abgebildet werden können, so dass Kosten, Aufwand und Gewicht möglichst gering gehalten werden können.

Zur Lösung dieser Aufgabe wird mit der Erfindung eine spezielle Verwendung einer Vorrichtung zur zweidimensionalen Abbildung von Szenen gemäß Anspruch 1 vorgeschlagen.

Hauptreflektorform, Subreflektorform, Primärstrahler, Abstand Primärstrahler-Subreflektor und Abstand Subreflektor-Hauptreflektor als Fokussierungsparameter sind erfindungsgemäß so aufeinander abgestimmt, dass sich für einen bestimmten Szenenabstand eine optimale Fokussierung und Gesichtsfeldgröße einstellt. Ferner sind die Fokussierungsparameter und die Bewegungsgeschwindigkeiten der beiden Antriebsmittel erfindungsgemäß so eingestellt, dass sich eine lückenlose kontinuierliche Abtastung der Szene durch einen Fokussierungsfleck ergibt, der sich im jeweiligen Szenenabstand in einer Trajektorie bewegt, die aus einer sich durch die Rotation des Subreflektors ergebenden Trajektorie und einer sich durch die Bewegung der Richtantennenanordnung quer zu deren optischen Achse ergebenden Trajektorie kombiniert ist und die zumindest angenähert die Form einer verschlungenen Zykloide aufweist.

Durch die vorliegende Erfindung wird somit ein vollmechanisches zweidimensionales Abbildungssystem vorgeschlagen, indem eine Kombination aus Hauptreflektor, rotationsbewegtem zur optischen Achse geneigtem Subreflektor und Speiseantenne als fokussierende Optik für elektromagnetische Wellen benutzt wird. Die Kombination dieser drei Baugruppen wird im Folgenden als Gesamtanordnung bezeichnet. Bei feststehendem und symmetrisch ausgerichtetem, also ungeneigtem Subreflektor wird eine solche Anordnung auch als Cassegrain-Antenne oder auch Gregory-Antenne bezeichnet.

Zweireflektor-Richtantennenanordnungen mit einem rotierenden, gegenüber der optischen Antennenachse geneigten Subreflektor sind z.B. aus EP 0 514 886 A1 und EP 0 002 982 A1 bekannt.

Sie dienen allerdings nicht zur zweidimensionalen Abbildung von Szenen, z.B. von Gelände, Objekten oder Personen, sondern sind zur sogenannten konischen Abtastung (conical scanning) vor allem in Verbindung mit Nachführungsprozessen (Tracking) vorgesehen.

Bei der gemäß den vorliegenden Erfindung verwendeten Vorrichtung zur zweidimensionalen Abbildung von Szenen wird der relativ zum Hauptreflektor kleine Subreflektor vorteilhaft z.B. über einen schnell rotierenden Kleinstmotor bewegt, wodurch der Ausleuchtbereich auf dem Hauptreflektor unter Ausnutzung der Rotationssymmetrie örtlich verändert, d.h. z.B. ebenfalls rotiert wird. Dadurch beschreibt das Antennendiagramm der Gesamtanordnung ebenfalls eine Trajektorie (Ortskurve) im Raum, die z.B. ein Kreis oder eine Ellipse im Szenenabstand vom Abbildungssystem sein kann.

Wird nun die Gesamtanordnung z.B. über einen exzentrischen Antrieb in eine oszillierende Bewegung in z.B. einer Richtung vertikal zur optischen Achse versetzt, so kann bei geeigneter Amplitude der Auslenkung die zweite Bilddimension gewonnen werden. Ferner kann auch die Gesamtanordnung in zwei Dimensionen bewegt werden, um z.B. die Szenengröße auszudehnen, wobei auch diese Bewegung deutlich langsamer als die Subreflektor-Rotation erfolgen muss.

Die erfindungsgemäße Kombination aus sehr schneller Bewegung einer kleinen Masse, nämlich des Subreflektors, und relativ langsamer Bewegung einer erheblich größeren Masse, nämlich der Gesamtanordnung, erlaubt trotz vollmechanischer Bewegung eine hohe Bildrate (z.B. $\geq 1$ Hz) bei hoher räumlicher Auflösung (z.B. $\leq 0,5°$) und Empfindlichkeit (z.B. $\leq 1$ K). Für eine ausreichende Szenengröße wird nur ein Minimum an Empfängern benötigt, z.B. nur ein Empfänger. Es ist leicht ein vollpolarimetrischer Betrieb möglich. Die Bilderzeugung ist problemlos und mit einem Minimum an Restfehlern zu bewerkstelligen und das System ist einfach zu kalibrieren. Dies ist mit einem extrem geringen Aufwand an Kosten und Hardware, einem geringen Leistungsverbrauch und einer geringen Gesamtmasse zu erzielen.

Die vorliegende Erfindung zeichnet die Nutzung eines schnell rotierenden Kleinstmotors zur Erzeugung der Drehbewegung eines ebenfalls kleinen Subreflektors geeigneter, aber beliebiger Form in Verbindung mit einer zweiten, deutlich langsameren Bewegung der gesamten Richtantennenanordnung, bestehend aus geeignetem Primärstrahler bzw. Primärstrahlergruppe, rotierendem Subreflektor und geeignetem, aber beliebig geformten, deutlich größeren Hauptreflektor, zur schnellen zweidimensionalen Abbildung mittels elektromagnetischer Wellen mit einem Minimum an Empfängern aus.

Zur Erzielung großer Bildraten muss bei der erfindungsgemäß verwendeten Vorrichtung mit hoher Geschwindigkeit nur der klein und in leichter Bauweise ausführbare Subreflektor rotiert werden. Die viel größere Gesamtanordnung kann deutlich langsamer bewegt werden, was mechanische Probleme mit der Massenträgheit für hohe räumliche Auflösungen, die einen großen Hauptreflektor erfordern, deutlich reduziert. Dadurch kann ferner mit nur einem Empfänger bzw. einem Minimum an Empfängern (Primärstrahlern) eine hohe Bildrate erreicht werden. Dieser Ansatz vereinigt im Gegensatz zum Stand der Technik einen geringen erforderlichen technischen Aufwand mit einer hohen erreichten Bildqualität.

Der das erste Antriebsmittel bildende Kleinstmotor verursacht keine eigene Abschattung des Strahlengangs, da er aufgrund seiner geringen Baugröße weitestgehend bis vollständig im ohnehin vorhandenen Schattenbereich des Subreflektors angeordnet ist.

Durch die geeignete Kombination von Hauptreflektorform, Subreflektorform, Speiseantenne, Abstand Speiseantenne-Subreflektor und Abstand Subreflektor-Hauptreflektor lässt sich für einen bestimmten Szenenabstand eine optimale Fokussierung der Abbildungseinheit einstellen. Diese kann sowohl im Nahfeld als auch im Fernfeld der Gesamtanordnung liegen. Fokussierung heißt dabei, dass in einem kleinen Volumenelement im Szenenabstand das gesamte Strahlenbündel die höchste Dichte hat (Fokussierungsfleck) und dass die elektrischen Weglängen der Strahlen von der Speiseantenne bis zum Volumenelement nahezu identisch sind. Ferner kann durch die zuvor genannte Kombinationsprozedur simultan die Gesichtsfeldgröße mit eingestellt und optimiert werden. Die vielfältige Kombinierfähigkeit erlaubt ein hohes Maß an Adaptionsfähigkeit des durch die Erfindung geschaffenen Vorrichtungskonzepts an viele Anforderungen.

Der Beitrag der Gesamtanordnung zum Systemrauschen kann ferner auf ein Minimum reduziert werden, da die elektromagnetischen Wellen durch die spezielle Strahlführungsgeometrie nur Luft passieren und an metallischen Strukturen hoher Güte reflektiert werden müssen.

Der Einsatz von vollpolarimetrischen Empfängern ist uneingeschränkt möglich, da keine polarisierenden Elemente in der Gesamtanordnung eingesetzt werden.

Die durch das zweite Antriebsmittel bewirkte Bewegung der Gesamtanordnung kann entweder durch eine exzentrisch erzeugte Wippbewegung, d.h. eine Winkeländerung der optischen Achse, oder durch eine lineare translatorische Bewegung in einer zur optischen Achse vertikalen Richtung erfolgen. Dies ist z.B. speziell für verzerrungsfreie Abbildungen im Nahfeld geeignet. Auch die Bewegung der Gesamtanordnung in zwei Dimensionen ist leicht möglich.

Die mechanische Entkopplung von schneller Rotation des Subreflektors und deutlich langsamerer Bewegung der Gesamtanordnung durch die Verwendung eines ersten und eines zweiten Antriebsmittels vermeidet mechanische Schwierigkeiten, die bei einer solchen Bewegungskombination an ein und demselben Bauelement sonst auftreten würden. Daher sind mit der durch die Erfindung geschaffenen Bewegungsantriebstrennung auch hohe Bildraten bei großen mechanischen Bauformen, d.h. auch bei tiefen Frequenzen, möglich.

Bei einer Nutzung mehrerer Empfänger oder Teilsysteme können deren Primärstrahler symmetrisch um einen in der optischen Achse angeordneten, zentralen Primärstrahler herum so angebracht werden, dass jeder den Subreflektor optimal ausleuchtet. Als Konsequenz dieser Ablage zur optischen Achse beschreibt jedes einzelne Antennendiagramm der Gesamtanordnung eine eigene Trajektorie über der Szene, die sich aber alle in einem gemeinsamen Bereich überlappen.

In diesem Bereich kann dann das Signal-zu-Rausch-Verhältnis (Empfindlichkeit) des Abbildungssystems entsprechend der Empfängeranzahl bzw. Teilsystemanzahl weiter durch z.B. Mittelung verbessert werden. Der geometrische Entwurf der Gesamtanordnung muss der Verwendung mehrerer Primärstrahler entsprechend Rechnung tragen, um Fokussierung und Gesichtsfeldgröße für alle Teilsysteme zusammen auf den Szenenabstand zu optimieren. Es ist auch denkbar, dass die einzelnen Empfänger nur Teilbilder der Szene erfassen, die zu einem Gesamtbild vereinigt werden können, was z.B. die Bildaufnahmedauer reduzieren kann.

Da die Ortskurven des Fokussierungsflecks in der Szene bestimmbar und damit bekannt sind, können die gewonnenen Bilddaten einfach z.B. mit einer Datenerfassungskarte (A/D-Wandler) und einem Messcomputer synchron zur Position aufgenommen, gespeichert und on-line oder off-line zu einem Bild vereint und dargestellt bzw. weiterverarbeitet werden. Es ist hiermit ein Minimum an verbleibenden Bildfehlern erreichbar, da jeder Empfänger ein vollständiges Bild für sich alleine produziert und somit zur Verbesserung der Empfindlichkeit eine einfache ortsrichtige Mittelung aller Bilder erfolgen kann.

Durch den Aufbau der Abbildungsgeometrie ist eine einfache Kalibrierung sowohl extern als auch intern möglich, da nur ein Minimum an Empfängern notwendig ist, von denen jeder ein vollständiges Bild aufnimmt. Extern kann z.B. über ein oder mehrere Referenzobjekte bekannter Intensität kalibriert werden, was das gesamte Abbildungssystem einschließt. Intern kann über einen Schalter direkt nach dem Primärstrahler auf eine oder mehrere Referenzquellen umgeschaltet und damit zumindest der meist dominierende Empfängereinfluss erfasst und berücksichtigt werden.

Die durch das Bildaufnahmeprinzip erzeugte irreguläre Abtastung und ungleiche Abtastwertedichte in der Szene kann durch ortsrichtige Mittelung (gewichtet oder ungewichtet) auf ein reguläres Raster in Einheiten der räumlichen Auflösungszelle gebracht werden, wie dies auch zur Bildrekonstruktion bzw. - generierung erfolgen muss. Dadurch kann zusätzlich zumindest teilweise die radiometrische Auflösung im Bild verbessert werden.

Die Verwendung eines Zweifrequenz- bzw. Mehrfrequenz-Speisehorns als Primärstrahler in der Primärstrahleranordnung erlaubt ferner den simultanen Betrieb bei zwei oder mehr deutlich unterschiedlichen Betriebsfrequenzen. Dies ermöglicht die gleichzeitige und geometrisch ähnliche Erfassung physikalisch unterschiedlicher Effekte, die den Informationsgehalt deutlich erhöhen können, und zwar dort problemlos, wo die Gesetze der geometrischen Optik noch die Strahlungsbilanz dominieren. In anderen Situationen ist die Gültigkeit am Einzelfall zu überprüfen. In jedem Fall ist keine komplizierte oder auch starke Frequenzabhängigkeit und auch keine Dispersion zu erwarten, da praktisch nur mit Reflexionen an metallischen Strukturen gearbeitet wird.

Das Abbildungsverfahren ist sowohl für passive (Radiometrie) als auch aktive Fernerkundung (Radartechnik) einsetzbar. Dabei muss lediglich das entsprechende Gerät (Radiometerempfänger oder Radar-Sende-Empfangseinheit) an die Primärstrahleranordnung angeschlossen werden. Die Signallaufzeit (maximale Entfernung) ist beim Radar dabei so zu wählen, dass das Echo noch innerhalb der Verweildauer des Fokussierungsflecks an einem Szenenpunkt empfangen wird.

Anwendungsmöglichkeiten der Erfindung bestehen im gesamten Fernerkundungssektor, in dem zweidimensionale Abbildungen mit hoher Bildrate und hoher Bildqualität gefordert sind. Dabei lassen sich zwei Hauptanwendungsgebiete unterscheiden, nämlich die Erdbeobachtung und die Sicherheitstechnik.

Im Bereich der Erdbeobachtung ist der Einsatz von gemäß der vorliegenden Erfindung verwendeten Vorrichtungen vornehmlich für bodengestützte Messsysteme und Luftfahrtanwendungen zu sehen. Bei Messeinsätzen am Erdboden können damit sich zeitlich schnell verändernde Szenerien über eine lange Dauer messtechnisch erfasst bzw.

abgebildet werden.

Bei Luftfahrteinsätzen ist einerseits an eine großflächige Kartierung von Landstrichen für z.B. geophysikalische Zwecke oder Allwetteraufklärung zu denken, während andererseits eine solche Vorrichtung auch als Navigationshilfe bei schlechtem Wetter zur Hinderniswarnung und beim Landeanflug genutzt werden kann. Auch der Einsatz bei einem Satelliten ist denkbar, da nur ein feststehender Hauptreflektor benötigt wird, der deshalb sehr groß sein kann (hohe räumliche Auflösung) und mechanisch nicht sehr steif zu sein braucht (Leichtbauweise).

In der Sicherheitstechnik kann eine durch die Erfindung vorgeschlagene Verwendung z.B. als Überwachungseinrichtung zum Schutz kritischer Infrastrukturen verwendet werden (z.B. allwetterfähige 24h-Überwachung von Außenanlagen), da dort eine sehr große räumliche Auflösung bei moderater Bildrate gefordert wird. Ferner ist ein Einsatz als Detektionssystem für optisch verborgene Gegenstände an Portalen oder Zugängen möglich, z.B. zur Personenkontrolle.

Bei derartigen Detektionssystemen werden eine hohe Bildrate, eine hohe räumliche Auflösung im Nahfeld und hinreichende Eindringtiefe der Strahlung gefordert. Das durch die vorliegende Erfindung vorgeschlagene Prinzip weist eine Attraktivität hinsichtlich seiner Einfachheit, geringer Kosten und Fähigkeiten auf, die von Sicherheitskräften mit Bedarf an einer Vielzahl solcher Systeme als Ergänzung für bestehende Systeme gewünscht wird.

Vorteilhafte und zweckmäßige Weiterbildungen, Ausgestaltungen und Verwendungsmöglichkeiten der Erfindung sind in den sich auf den Patentanspruch 1 unmittelbar oder mittelbar rückbeziehenden Unteransprüchen angegeben.

Die Vorrichtung nach der vorliegenden Erfindung wird im Folgenden anhand von Zeichnungen erläutert. Es zeigen:

Fig.1 in einer schematischen Schrägansicht ein Ausführungsbeispiel einer Richtantennenanordnung für die Vorrichtung zur zweidimensionalen Abbildung einer Szene gemäß der vorliegenden Erfindung,

Fig.2 eine frontale Ansicht auf die in Fig.1 gezeigte Richtantennenanordnung mit Ausleuchtbereich auf dem Hauptreflektor und Trajektorie des Zentralstrahls,

Fig.3 in einem Beispiel links oben die nur durch die Subreflektordrehung erzeugte Trajektorie eines Fokussierungsflecks im Szenenabstand, links unten die nur durch die Bewegung der gesamten Richtantennenanordnung erzeugte Trajektorie eines Fokussierungsflecks im Szenenabstand und rechts die durch Kombination dieser beiden Trajektorien entstehende Trajektorie des Fokussierungsflecks im Szenenabstand,

Fig.4 in einer schematischen Seitenansicht eine erste mögliche Einstellung der Richtantennenanordnung zur Erzeugung einer gewünschten Gesichtsfeldgröße im Szenenabstand,

Fig.5 in einer schematischen Seitenansicht eine zweite mögliche Einstellung der Richtantennenanordnung zur Erzeugung einer gewünschten Gesichtsfeldgröße im Szenenabstand,

Fig.6 in einer schematischen Seitenansicht eine dritte mögliche Einstellung der Richtantennenanordnung zur Erzeugung einer gewünschten Gesichtsfeldgröße im Szenenabstand,

Fig.7 ein Abtastraster für ein Szenario zur Personenkontrolle, wobei zusätzlich zur Rotation des Subreflektors in vertikaler Richtung eine sinusförmige Wippbewegung angenommen wurde,

Fig.8 im Zusammenhang mit Fig.7 die Verbesserung der Temperaturauflösung in Abhängigkeit der Abtastdichte pro Auflösungszelle,

Fig.9 ein Abtastraster für ein Szenario zur Erdbeobachtung, wobei zusätzlich zur Rotation des Subreflektors eine konstante Satellitengeschwindigkeit angenommen wurde, und

Fig.10 im Zusammenhang mit Fig.9 die Verbesserung der Temperaturauflösung in Abhängigkeit der Abtastdichte pro Auflösungszelle.

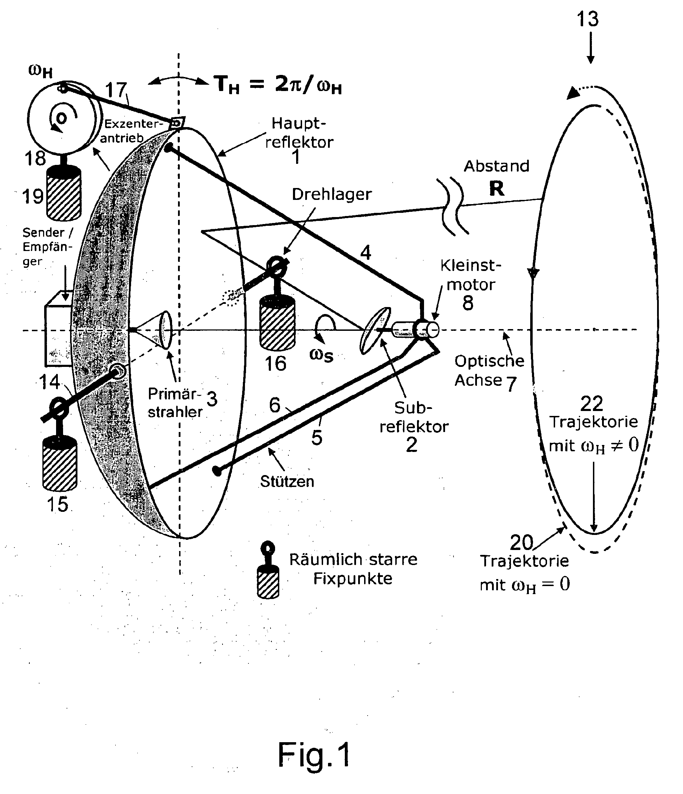

Fig.1 zeigt in einem Ausführungsbeispiel eine Richtantennenanordnung, wie sie für eine vollmechanisch abtastende Vorrichtung zur zweidimensionalen Abbildung einer Szene gemäß der vorliegenden Erfindung verwendet werden kann. Die in Fig.1 dargestellte Richtantennenanordnung, die als fokussierende Optik für elektromagnetische Mikrowellen benutzt wird, weist eine Kombination aus einem Hauptreflektor 1, einem drehbewegten Subreflektor 2 und einem Primärstrahler 3 auf.

Die Kombination dieser drei Baugruppen wird im Folgenden als Gesamtanordnung bezeichnet.

Der Hauptreflektor 1 ist im wesentlichen rotationssymmetrisch ausgebildet, ebenso der mittels dreier Stützen 4, 5 und 6 am Hauptreflektor 1 gehaltene Subreflektor 2. Der Primärstrahler 3 liegt in der mit der Symmetrieachse des Hauptreflektors 1 zusammenfallenden optischen Achse 7 der Gesamtanordnung. Der Subreflektor 2 ist relativ zum Hauptreflektor 1 klein bemessen. Die Symmetrieachse des Subreflektors 2 ist in Bezug auf die optische Achse 7 der Richtantennenanordnung geneigt. Zur Ausübung einer Rotationsbewegung des in Bezug auf die optische Achse 7 der Richtantennenanordnung geneigten Subreflektors 2 in dessen Scheitelpunkt um die optische Achse 7 der Richtantennenanordnung ist ein schnell rotierender Kleinstmotor 8 im Schattenbereich des Subreflektors 2 vorgesehen, so dass keine Strahlabschattung im Strahlengang erzeugt wird.

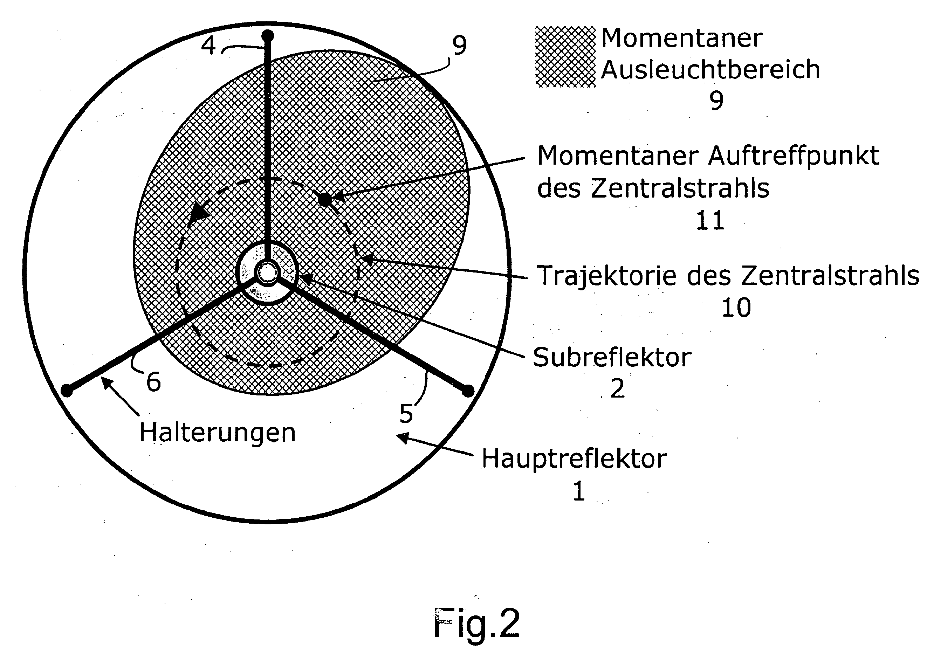

Wie Fig.2 in einer Frontalansicht auf die Gesamtanordnung zeigt, wird durch die Rotationsbewegung des Subreflektors 2 der kreuzschraffiert dargestellte Ausleuchtbereich 9 auf dem Hauptreflektor 1 unter Ausnutzung der Rotationssymmetrie örtlich verändert, d.h. ebenfalls rotiert. Gezeigt ist in Fig.2 der aktuelle Ausleuchtbereich 9 auf dem Hauptreflektor 1 und die kreisförmige, auch als Trajektorie 10 bezeichnete Ortskurve des Zentralstrahls, entlang der sich der Ausleuchtbereich 9 bewegt. Mit 11 ist der für den dargestellten momentanen Ausleuchtbereich 9 wirksame momentane Auftreffpunkt des Zentralstrahls bezeichnet. Es wird hier angemerkt, dass der Ausleuchtbereich 9 kein Kreis sein muss und auch der Auftreffpunkt 11 des Zentralstrahls nicht mittig im Ausleuchtbereich 9 liegen muss.

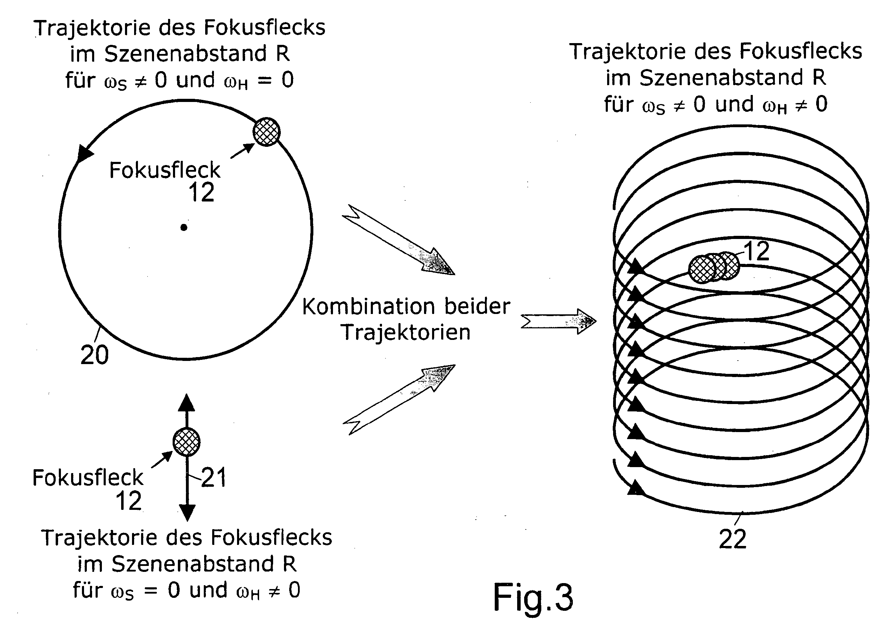

Infolge der Rotationsbewegung des Subreflektors 2 mit einer Kreisfrequenz $\omega_S$ beschreibt das Antennendiagramm der Gesamtanordnung ebenfalls eine Trajektorie (Ortskurve) 20 im Raum, die z.B. ein Kreis oder eine Ellipse sein kann. Dieser Sachverhalt ist auch in Fig.3 links oben dargestellt. Im Einzelnen zeigt Fig.3 links oben die ausschließlich durch die Subreflektordrehung erzeugte Trajektorie 20 eines Fokussierungsflecks 12 im Szenabstand R. Der aus Fig. 1 ersichtliche Abstand R ist die Entfernung der abzubildenden Szene 13 zum Abbildungssystem. Die Szene wird dabei in einer Szenenebene definiert, d.h. in der Ebene, in der virtuell alle abgebildeten Szenendetails lokalisiert sind und für welche die optimale Fokussierung, also die kleinste Fokussierungsfleckfläche, eingestellt ist.

Die in Fig.1 dargestellte Richtantennengesamtanordnung wird über einen exzentrischen Antrieb in eine oszillierende Auslenkungsbewegung in einer vertikal zur optischen Achse 7 verlaufenden Richtung versetzt. Durch diese Maßnahme wird bei geeigneter Amplitude der Auslenkung eine zweite Bilddimension gewonnen, wie in Fig.3 links unten dargestellt ist. Im Ausführungsbeispiel von Fig.1 wird die gesamte Richtantennenanordnung mit Hauptreflektor 1, Subreflektor 2 und Primärstrahler 3 um eine horizontale Schwenkachse 14, die an zwei räumlich starren Fixpunkten 15 und 16 drehbar gelagert ist, oszillierend gekippt, also gewippt.

Der exzentrische Antrieb erfolgt über eine mit ihrem einen Ende oben am Hauptreflektor 1 gelenkig befestigte Stange 17, die mit ihrem anderen Ende an einer über einen kleinen Elektromotor angetriebenen Scheibe 18 exzentrisch angelenkt ist. Die an einem räumlich starren Fixpunkt 19 drehbar angeordnete Scheibe rotiert mit einer Kreisfrequenz $\omega_H$. Die Gesamtperiodendauer für einen Kippvorgang beträgt dann $T_H = 2\pi\omega_H$.

Sowohl der kleine Elektromotor zum Antrieb der Exzenterscheibe 18 als auch der Kleinstmotor 8 zum Erzeugen der Rotationsbewegung des Subreflektors 2 verursachen keine eigene Abschattung im Strahlengang. Der Kleinstmotor 8 ist weitestgehend bis vollständig im ohnehin vorhandenen Schattenbereich des Subreflektors 2 angebracht.

Von Bedeutung ist, dass der Antrieb für die Subreflektordrehung und der Antrieb für die Bewegung der Gesamtanordnung zueinander so ausgelegt sind, dass die Bewegungsgeschwindigkeit des Subreflektors relativ zur Bewegungsgeschwindigkeit der gesamten Richtantennenanordnung sehr hoch ist.

Der vom Primärstrahler 3 erzeugte Strahl wird somit in der in Fig.1 dargestellten Gesamtanordnung über den schnell mit einer Kreisfrequenz $\omega_S$ rotierenden Subreflektor 2 auf den Hauptreflektor 1 umgelenkt und gelangt von dort im Abstand R auf die abzubildende Szene 13. Zusammen mit der durch den mit der Kreisfrequenz $\omega_H$ angetriebenen Exzenterantrieb erzeugten Wippbewegung der Gesamtanordnung wird eine zweidimensionale Abtastung der Szene erreicht. Dieser Sachverhalt gilt sowohl für Sende- als auch für Empfangsbetrieb.

Es wird hier angemerkt, dass die Bewegung der Gesamtanordnung anstatt durch die vorstehend beschriebene Wippbewegung auch durch eine translatorische Linearbewegung realisiert werden kann. Die Gesamtanordnung kann grundsätzlich auch in zwei Dimensionen quer zur optischen Achse 7 bewegt werden.

Fig.3 zeigt in ihrem rechten Teil die durch die Richtantennenanordnung von Fig.1 erzeugte Kombination der beiden links in Fig.3 dargestellten Trajektorien des Fokussierungsflecks 12 im Szenabstand R, wobei links oben die durch die Rotationsbewegung des Subreflektors 2 mit der Kreisfrequenz $\omega_S$ ($\omega_S \neq 0$; $\omega_H = 0$) im Szenabstand R erzeugte Trajektorie 20 des Fokussierungsflecks 12 und links unten die durch die Wippbewegung der Gesamtanordnung mit der Kreisfrequenz $\omega_H$ ($\omega_H \neq 0$; $\omega_S = 0$) im Szenabstand R erzeugte Trajektorie 21 des Fokussierungsflecks 12 abgebildet sind.

Für die kombinierte Trajektorie 22 des Fokussierungsflecks 12 in Fig.1 und rechts in Fig.3 gilt demzufolge $\omega_H \neq 0$ und $\omega_S \neq 0$. Die durch die Wippbewegung mit der Kreisfrequenz $\omega_H$ erzeugte Vertikalbewegung des Fokussierungsflecks 12 könnte grundsätzlich auch durch eine translatorische, quer zur optischen Achse 7 verlaufende Linearbewegung der Gesamtanordnung mit der Geschwindigkeit $v_H$ realisiert werden.

Die Form des Hauptreflektors 1, die Form des Subreflektors 2, der Primärstrahler 3, der Abstand zwischen Primärstrahler 3 und Subreflektor 2 und der Abstand zwischen dem Subreflektor 2 und dem Hauptreflektor 1 sind als Fokussierungsparameter so aufeinander abgestimmt, dass sich für einen bestimmten Szenenabstand R eine optimale Fokussierung und Gesichtsfeldgröße einstellt.

Die genannten Fokussierungsparameter und die durch die Kreisfrequenzen $\omega_H$ und $\omega_S$ bestimmten Bewegungsgeschwindigkeiten der beiden Antriebsmittel sind so eingestellt, dass sich eine lückenlose kontinuierliche Abtastung der Szene durch den Fokussierungsfleck 12 ergibt, der sich im Szenenabstand R in der Trajektorie 22 bewegt, die zumindest angenähert die Form einer verschlungenen Zykloide aufweist.

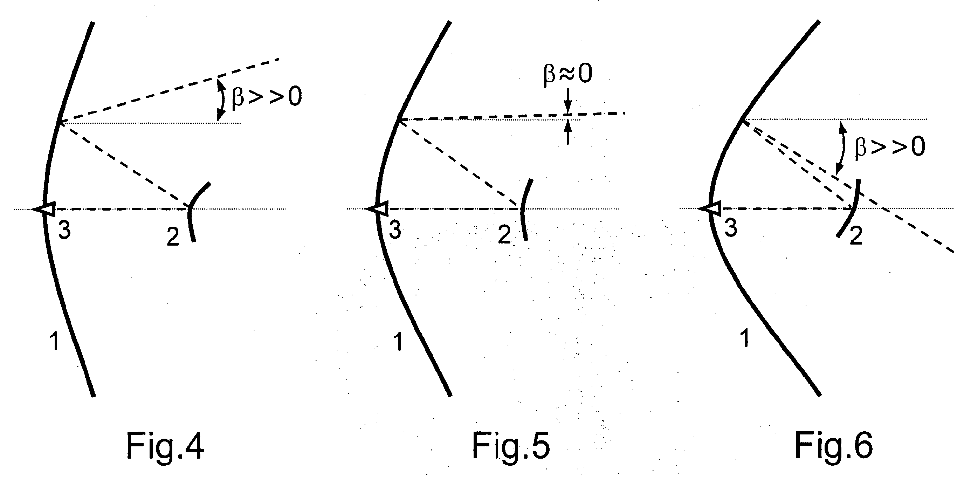

Fig.4, Fig.5 und Fig.6 zeigen mögliche Einstellungen zur Erzeugung einer gewünschten Gesichtsfeldgröße im Abstand R der abzubildenden Szene zum Abbildungssystem mit Hauptreflektor 1, Subreflektor 2 und Primärstrahler 3. Eingezeichnet ist jeweils schematisch in einer Seitensicht die Hauptblickrichtung unter einem Winkel β, in welcher die optimale Fokussierung im Abstand R erzielt wird, wobei in der Regel nicht alle beteiligten Strahlengänge in genau die gleiche Richtung verlaufen müssen. Damit kann die Bildbreite über den Winkel β eingestellt werden, wobei die Bildhöhe durch den maximalen vertikalen Kippwinkel bzw. die maximale Länge einer linearen Vertikalbewegung vorgegeben wird. Im Nahfeldbetrieb kann auch mit β ≈ 0 gearbeitet werden.

Nachfolgend sollen zwei konkrete Anwendungsbeispiele einer gemäß der vorliegenden Erfindung ausgebildeten Vorrichtung zur zweidimensionalen Abbildung von Szenen rechnerisch erläutert werden. Im ersten Fall handelt es sich um ein System zur Personenkontrolle, im zweiten Fall um ein System zur satellitengestützten Erdbeobachtung.

Fall 1: Personenkontrolle:

Folgende Vorgaben für den Systementwurf werden vereinbart:

Mittenfrequenz: $f_0$ = 90 $GHz$,

Systembandbreite: $B$ = 5 $GHz$,

Systemrauschtemperatur: $T_{sys}$ = 800$K$,

Winkelauflösung in E- und H-Ebene: $\Delta\Theta_E = \Delta\Theta_H = \Delta\Theta$ = 0,5°,

Abstand der Fokalebene (Szene): $R_0$ = 3 $m$,

Szenengröße Höhe × Breite: $\Theta_H$ = 41°, $\Theta_B$ = 20°,

Überlappungsfaktor: $u$ = 0,1,

Abtastfaktor: $s$ = 0,5,

Zeitbedarf pro Bild: $T_{Bild}$ = 1$s$.

Der Überlappungsfaktor gibt an, inwieweit sich aufeinanderfolgende Auflösungszellen überlappen sollen, d.h. bei $u$ = 0 gibt es gar keine Überlappung, bei $u$ = 1 wäre sie 100% und die Antennenkeule würde sich nicht weiter bewegen und es wäre keine Abbildung möglich. Bei $u$ = 0,1 beträgt somit die Überlappung 10 %.

Der Abtastfaktor gibt an, um wie viele Auflösungszellen sich die Antennenkeule innerhalb der Integrationszeit weiter bewegen darf. Die Integrationszeit gibt an, wie lange das Messsignal zur Rauschreduktion aufintegriert werden darf.

Ferner wird von einer oszillatorischen Bewegung des Gesamtsystems ausgegangen (Wippbewegung), d.h. die Bilddimension in vertikaler Richtung, also die Bildhöhe, wird durch einen sinusförmigen Wegverlauf und einen kosinusförmigen Geschwindigkeitsverlauf gekennzeichnet, wobei ein vollständiges Bild in einer halben Periodendauer erzeugt wird.

Die räumliche Auflösung in der Fokalebene (Szene) kann folgendermaßen abgeschätzt werden, wobei die vorgegebene Winkelauflösung zwar als Nahfeldwert anzusehen ist, aber näherungsweise wie im Fernfeld benutzt wird.

$$\Delta x_{GH} = R_0 \left( \tan\left[0.5\left(\Theta_B + \Delta\Theta\right)\right] - \tan\left[0.5\left(\Theta_B - \Delta\Theta\right)\right]\right),$$
$$\Delta x_{KH} = 2 R_0 \tan(\Delta\Theta/2) \ / \ \cos(\Theta_B/2). \tag{1a,b}$$

Es ergeben sich damit für die große und kleine Halbachse (GH und KH) der in die Szene projizierten Auflösungsellipse Werte von etwa 2,6 cm bis 2,7 cm. Die Szenenhöhe und -breite können folgendermaßen berechnet werden,

$$W_H = 2R_0 \tan(\Theta_H/2), \qquad W_B = 2R_0 \tan(\Theta_B/2), \qquad (2a,b)$$

und es ergeben sich Werte von 2,24 m und 1,06 m, was für eine Personenabbildung in 3 m Abstand ausreichend ist. Für die erforderliche maximale Abtastgeschwindigkeit der Auflösungsellipse in vertikaler Richtung ergibt sich mit

$$v_{H,\max} = 0,5\left(\Theta_H - \Theta_B\right) \frac{\pi}{T_{Bild}} R_0 \qquad (3)$$

ein Wert von ca. 1,73 m/s. Ferner kann der maximal zulässige Abstand zweier vertikaler Auflösungszellen in der Mittenposition der Wippbewegung durch

$$dy_{\max} = (1-u)\,\Delta x_{GH} \qquad (4)$$

abgeschätzt werden und ergibt etwa 2,43 cm. Aus den Gleichungen (3) und (4) kann jetzt der maximale Zeitbedarf für eine Subreflektorrotation wie folgt berechnet werden,

$$T_{rot} = dy_{\max} / v_{H,\max}, \qquad (5)$$

und ergibt etwa 14 ms. Daraus lässt sich eine erforderliche Drehzahl von ca. 4272 U/min abschätzen und die Abtastgeschwindigkeit der Auflösungsellipse innerhalb der Rotation bei Mittenstellung der Wippbewegung berechnet sich nach

$$v_{rot} = \frac{\pi\,W_B}{T_{rot}} \qquad (6)$$

zu etwa 237 m/s. Wenn nun der maximale Abstand zweier unabhängiger Abtastungen innerhalb der Rotation für Mittenstellung der Wippbewegung nach

$$dx_{\max} = s\,(1-u)\,\Delta x_{KH} \qquad (7)$$

zu ca. 1,17 cm berechnet werden kann, so erhält man für die maximal zulässige Integrationszeit mit der Beziehung

$$\tau_{\max} = dx_{\max} / v_{rot} \qquad (8)$$

den Wert von etwa 49 μs. Daraus ergibt sich für die Temperaturauflösung eines Total-Power-Radiometerempfängers mit

$$\Delta T = \frac{T_{sys}}{\sqrt{B\,\tau_{\max}}} \qquad (9)$$

der Wert von ca. 1,6 K für einen Abtastwert. Aus der Integrationszeit, der Anzahl der simultan zu erfassenden Messwerte und der gewünschten Bittiefe der Analog/Digital-Wandlung können die notwendige Abtastfrequenz und Datenrate wie folgt ermittelt werden,

$$f_{abtast} \quad = \quad N_{Messwerte} / \tau_{max} \quad , \quad n_{Rate} \quad = \quad N_{Bit} \, f_{abtast} \, . \quad (10)$$

Wenn z.B. drei Messwerte je Abtastung mit 16 Bit Auflösung zu erfassen sind, dann ergibt sich eine Abtastrate von etwa 61 kHz und eine Datenrate von ca. 120 kByte/s.

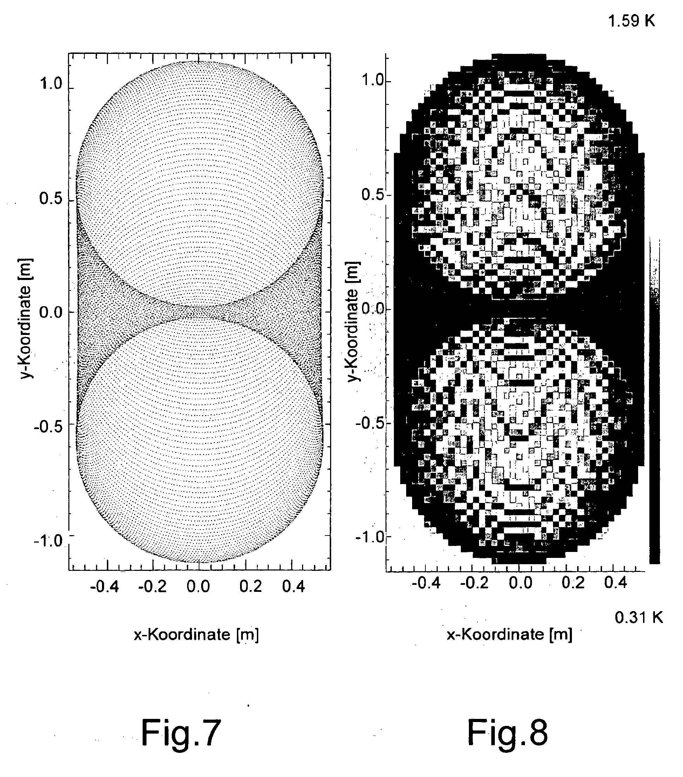

Das berechnete Abtastraster für die angenommene Bewegung der Antennenkeule in der Szenenebene ist in Fig.7 dargestellt. Zusätzlich zur Rotation des Subreflektors wurde in vertikaler Richtung eine sinusförmige Wippbewegung angenommen. Die Abtastpunkte markieren die Orte, an denen Messwerte der Szene erfasst werden.

Wie zu erkennen ist, ist die Abtastdichte ortsabhängig verschieden und es fallen mehrere Abtastwerte in eine Auflösungszelle. Legt man nun ein reguläres Bildraster in Einheiten der Auflösungszellengröße zu Grunde, so können die N Abtastwerte in jeder Rasterzelle gemittelt werden und die Temperaturauflösung für diese Zelle verbessert sich noch um maximal $\sqrt{N}$ .

Für das berechnete Abtastraster ist die resultierende Temperaturauflösung in Fig.8 dargestellt. Es ist zu erkennen, dass praktisch im gesamten Bildbereich zusätzlich eine Verbesserung der Temperaturauflösung möglich ist, wenn die Messdaten auf ein reguläres Raster wie zur Bildrekonstruktion zusammengefasst werden. In weiten Teilen des Szenenbereichs wird ein Wert von um 1 K oder sogar besser erreicht. Die Bildebene in Fig.8 wurde in ein reguläres Raster in Einheiten der Auflösungszelle eingeteilt, wie dies auch zur Bildrekonstruktion vorgenommen wird.

<u>Fall 2: Erdbeobachtung:</u>

Folgende Vorgaben für den Systementwurf werden vereinbart:

Mittenfrequenz: $f_0$ = 1,42 *GHz*,
Systembandbreite: *B* = 20 *MHz*,
Systemrauschtemperatur: $T_{sys}$ = 600 *K,*
Winkelauflösung in E- und H-Ebene: $\Delta\Theta_E$ = 0,7°, $\Delta\Theta_H$ = 1,0°,
Satellitenhöhe über Erde: $R_0$ = 750 *km*,
Szenengröße (Streifenbreite): $W_B$ = 1500 *km*,
Überlappungsfaktor: *u* = 0,1,
Abtastfaktor: *s* = 0,5.

Die Winkelauflösung soll in einer Richtung kleiner sein als in der anderen, um den Projektionseffekt für die Auflösungszelle auf der Erdoberfläche zu vermindern. Dadurch wird eine in etwa kreisförmige Auflösungszelle erzeugt, wie dies von Datennutzern häufig gewünscht ist.

Der Effekt der Erdkrümmung wird hier vernachlässigt und es wird eine flache Erde angenommen. Bei einer genaueren Betrachtung kann dies problemlos berücksichtigt werden.

Es wird nur eine gewünschte Streifenbreite vorgegeben, da der Satellit kontinuierlich Daten aufzeichnen soll und daher die Angabe einer Bildlänge willkürlich ist. Somit kann auch keine Gesamtzeit für ein Bild vorgegeben werden, da die Satellitengeschwindigkeit durch den Orbit bestimmt wird. Der Orbit soll nahezu polar und kreisförmig sein.

Zur Berechnung der relevanten Systemparameter können weitestgehend die Beziehungen von der Personenkontrolle verwendet bzw. leicht abgewandelt werden. Formelmäßig werden daher nur diejenigen Beziehungen zusätzlich wiedergegeben, die zum besseren Verständnis notwendig sind.

Die Bild- bzw. Streifenbreite in Winkelgraden kann geometrisch leicht nach folgender Beziehung ermittelt werden,

$$\Theta_K \quad = \quad 2 \arctan\left(\frac{W_B}{2 R_0}\right), \quad\quad (11)$$

und ergibt im vorliegenden Fall 90°. Der halbe Winkel von 45° ist gerade auch der halbe Öffnungswinkel des Abtastkegels, den die Antennenkeule durch die Rotation des Subreflektors beschreiben soll.

Die Geschwindigkeit in Flugrichtung und Bildmitte der Auflösungszelle auf der Erde kann mit

$$v_{flug} = \Omega_{sat} \, r_{Erde}$$

$$(12)$$

zu ca. 6,69 km/s berechnet werden, wobei die Umlaufwinkelgeschwindigkeit des Satelliten mit etwa 1,05 mrad/s durch den Orbit und der Erdradius mit ca. 6371 km festgelegt sind. Die Umlaufdauer für einen Orbit beträgt etwa 5980 s oder 1 h 40 min.

Die räumliche Auflösung auf der Erde kann durch nachfolgende Gleichungen abgeschätzt werden, wobei sie in diesem Fall in jeder Situation konstant ist,

$$\Delta x_{GH} = R_0 \left( \tan\left[ 0.5 \left( \Theta_K + \Delta\Theta_E \right) \right] - \tan\left[ 0.5 \left( \Theta_K - \Delta\Theta_E \right) \right] \right),$$

$$\Delta x_{KH} = 2 R_0 \tan(\Delta\Theta_H / 2) \, / \, \cos(\Theta_K / 2).$$

$$(13a, b)$$

Für die große Halbachse (GH) und die kleine Halbachse (KH) der Auflösungsellipse ergeben sich daraus die Werte von etwa 18,3 km und 18,5 km, die voraussetzungsgemäß etwa gleich groß sind. Der maximal zulässige Abstand zweier Pixel kann nach Gleichung (4) zu ca. 16,5 km berechnet werden, und aus Gleichung (5) ergibt sich damit die maximale Zeit für eine Subreflektorrotation zu etwa 2,5 s bzw. eine Drehzahl von 24,4 U/min. Die Auflösungszelle wandert somit in Rotationsrichtung nach Gleichung (6) mit ca. 1913 km/s über die Erdoberfläche und der Abstand zweier aufeinanderfolgender Abtastungen beträgt mit Gleichung (7) etwa 8,3 km.

Mit der maximal zulässigen Integrationszeit von ca. 4,3 ms nach Gleichung (8) erhält man für einen Total-Power-Empfänger mit Gleichung (9) eine Temperaturauflösung von etwa 2,0 K. Aus Gleichung (10) ergibt sich eine Abtastfrequenz von rund 918 Hz und eine Datenrate von etwa 1,8 kByte/s, wenn hier z.B. vier Messwerte je Abtastung erfasst werden sollen.

Auch in diesem Fall der Erdbeobachtung wird ein irreguläres Abtastraster mit variierender Abtastdichte auf der Szene erzeugt. In identischer Weise wie im vorher erläuterten Beispiel der Personenkontrolle können auch hier ein reguläres Raster in Einheiten der Auflösungszelle erzeugt und die Messwerte entsprechend gemittelt werden.

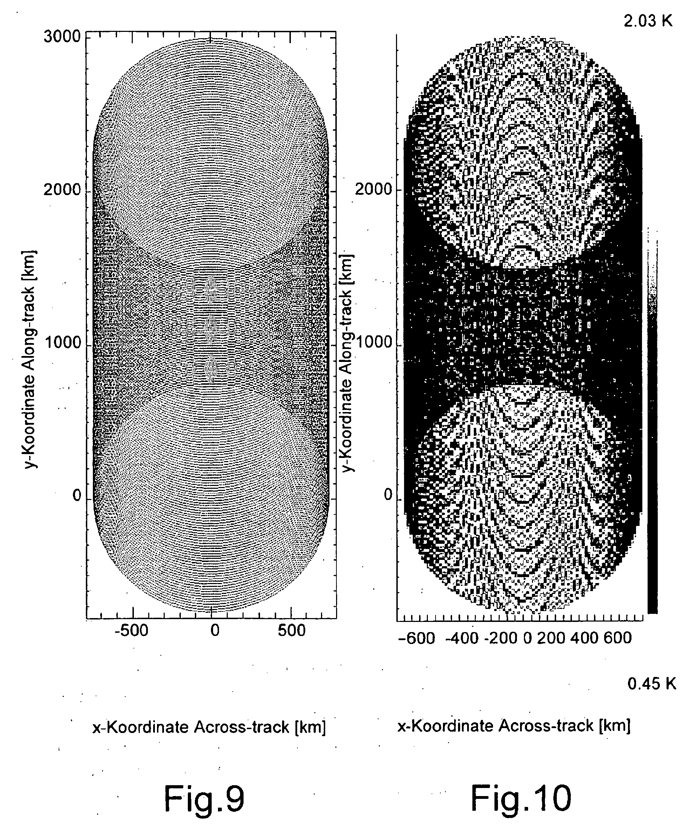

Fig.9 zeigt hierzu entsprechend das Abtastraster für eine Szenenlänge von fast 4000 km. Zusätzlich zur Rotation des Subreflektors wurde hierbei eine konstante Satellitengeschwindigkeit angenommen. Die Abtastpunkte markieren die Orte, an denen Messwerte der Szene erfasst werden.

Die in Zusammenhang mit Fig.9 stehende Fig.10 zeigt die Verbesserung der Temperaturauflösung in Abhängigkeit der Abtastdichte pro Auflösungszelle. Die Bildebene wurde in ein reguläres Raster in Einheiten der Auflösungszelle eingeteilt, wie dies auch zur Bildrekonstruktion vorgenommen wird. Der im Mittelteil von Fig.10 liegende dunklere Bereich stellt den normalen Betriebsfall dar, bei dem der Satellit sich bereits in der Phase der kontinuierlichen Datenerfassung befindet. In diesem Bereich kann sogar weitestgehend eine Temperaturauflösung von etwa 1 K erreicht werden.

Das hier beschriebene Erdbeobachtungsszenario beschreibt als Beispiel eine mögliche Anwendung eines Verfahrens zur Messung von Bodenfeuchte und Oberflächensalzgehalt der Ozeane, wofür sich der geschützte Frequenzbereich um 1,42 GHz eignet. Der hierzu benötigte sehr große (ca. 30 - 40 m Durchmesser), aber feststehende Hauptreflektor könnte mit Hilfe von faltbaren oder aufblasbaren Strukturen realisiert werden. Gegenwärtige Aktivitäten von ESA und NASA zu dieser Anwendung erreichen bei weitem nicht die hier dargelegten Leistungsdaten.

Es ist ferner möglich, durch eine Auslenkung der Rotationsachse aus der Nadir-Richtung, z.B. durch Neigung des gesamten Satelliten, verschiedene Einfallswinkel einzustellen, was zusätzliche Informationen liefern kann.

Außerdem ist die zuvor beschriebene Satellitenanwendung durch entsprechende Skalierung auch für den Einsatz auf einer Flugplattform, z.B. Flugzeug, Zeppelin, übertragbar.

Bezugszeichenliste

| 1 | Hauptreflektor |
|---|---|
| 2 | Subreflektor |
| 3 | Primärstrahler |
| 4, 5, 6 | Stützen |
| 7 | Optische Achse |

| 8 | Kleinstmotor; erste Antriebsmittel |
|---|---|
| 9 | Momentaner Ausleuchtbereich |
| 10 | Trajektorie des Zentralstrahls |
| 11 | Momentaner Auftreffpunkt des Zentralstrahls |
| 12 | Fokussierungsfleck |
| 13 | Abzubildende Szene |
| 14 | Schwenkachse |
| 15, 16 | Räumlich starre Fixpunkte |
| 17 | Stange |
| 18 | Exzenterscheibe |
| 19 | Räumlich starrer Fixpunkt |
| 20, 21, 22 | Trajektorien (Ortskurven) in der Szene |
| $\omega_H$ | Kreisfrequenz für Gesamtanordnung |
| $\omega_S$ | Kreisfrequenz für Subreflektor |
| R | Abstand der Szene |
| $T_H$ | Gesamtperiodendauer für Kippvorgang |

**Patentansprüche**

**1.** Verwendung einer vollmechanischen, beweglichen, als Zweireflektor-Antenne ausgebildeten Reflektor-Richtantennenanordnung zur zweidimensionalen Abbildung von Szenen (13), z.B. von Gelände, Objekten oder Personen, durch kontinuierliche Mikrowellen-Abtastung mittels der Reflektor-Richtantennenanordnung, die aus einem rotationssymmetrischen Hauptreflektor (1), einer Primärstrahleranordnung (3), welche aus einem oder mehreren Primärstrahlern besteht und in der mit der optischen Achse (7) der Richtantennenanordnung zusammenfallenden Symmetrieachse des Hauptreflektors angeordnet ist, und einem relativ zum Hauptreflektor klein bemessenen, rotationssymmetrischen Subreflektor (2) besteht, dessen Symmetrieachse in Bezug auf die optische Achse der Richtantennenanordnung geneigt ist, wobei

- erste Antriebsmittel (8) zur Ausübung einer Rotation des in Bezug auf die optische Achse der Richtantennenanordnung geneigten Subreflektors in dessen Scheitelpunkt um die optische Achse der Richtantennenanordnung und zweite Antriebsmittel (17, 18) zur Ausübung einer Bewegung der gesamten Richtantennenanordnung in einer zumindest angenähert senkrecht zur Richtung der optischen Achse der Richtantennenanordnung verlaufenden Richtung vorgesehen sind,
- empfangsseitig eine Auswerteeinrichtung zur Erstellung eines Bildes der Szene aus den empfangenen Mikrowellen vorgesehen ist,
- die Hauptreflektorform, die Subreflektorform, der Primärstrahler (3), der Abstand zwischen dem Primärstrahler und dem Subreflektor (2) und der Abstand zwischen dem Subreflektor und dem Hauptreflektor (1) als Fokussierungsparameter bei einer passiven oder aktiven Mikrowellenabtastung zur Erzielung einer optimalen Fokussierung und Gesichtsfeldgröße bei einem bestimmten Szenenabstand (R) abgestimmt sind,
- die beiden Antriebsmittel (8; 17, 18) zur Erzielung einer sehr hohen Bewegungsgeschwindigkeit des Subreflektors relativ zur Bewegungsgeschwindigkeit der gesamten Richtantennenanordnung vorgesehen sind,
- die Fokussierungsparameter und die Bewegungsgeschwindigkeiten der beiden Antriebsmittel zur lückenlosen kontinuierlichen Abtastung der Szene (13) einen Fokussierungsfleck (12) beschreiben, der sich im jeweiligen Szenenabstand (R) in einer Trajektorie (22) bewegt, die aus einer sich durch die Rotation des Subreflektors ergebenden Trajektorie (20) und einer sich durch die Bewegung der Richtantennenanordnung quer zu deren optischen Achse ergebenden Trajektorie (21) kombiniert ist und die zumindest angenähert die Form einer verschlungenen Zykloide aufweist, und
- die empfangsseitige Auswerteeinrichtung die infolge der Bestimmbarkeit und damit der Kenntnis der Trajektorien des Fokussierungsflecks in der Szene gewonnenen Bilddaten synchron zur Position aufnimmt, speichert und online oder offline zu einem Bild vereint und darstellt oder weiterverarbeitet.

**2.** Verwendung nach Anspruch 1, **dadurch gekennzeichnet, dass** das erste Antriebsmittel (8) zur Erzeugung der Rotationsbewegung des relativ zum Hauptreflektor (1) kleinen Subreflektors (2) als ein schnell rotierender, auf der Schattenseite des Subreflektors angeordneter und somit nicht im Strahlengang liegender Kleinstmotor ausgebildet ist.

**3.** Verwendung nach Anspruch 1 oder 2, **dadurch gekennzeichnet, dass** das zweite Antriebsmittel (17, 18) durch einen exzentrisch wirksamen, elektromotorischen Antrieb gebildet ist, der die gesamte Richtantennenanordnung in eine oszillierende Bewegung in einer Richtung zumindest angenähert vertikal zur optischen Achse (7) versetzt, so dass bei geeigneter Amplitude der Auslenkung die zweite Bilddimension gewonnen wird.

4. Verwendung nach Anspruch 1 oder 2, **dadurch gekennzeichnet, dass** das zweite Antriebsmittel in elektromotorischen Antrieben besteht, mittels welcher die gesamte Richtantennenanordnung in zwei Dimensionen quer zur optischen Achse der Richtantennenanordnung beweglich ist, so dass die Szenengröße ausdehnbar ist, wobei diese Bewegungen deutlich langsamer als die Rotationsbewegung des Subreflektors (2) ist.

5. Verwendung nach einem der vorhergehenden Ansprüche, **dadurch gekennzeichnet, dass** bei Nutzung mehrerer Empfänger oder Teilsysteme deren Primärstrahler in der Primärstrahleranordnung symmetrisch um einen in der optischen Achse angeordneten, zentralen und einem der Empfänger bzw. Teilsysteme zugeordneten Primärstrahler herum angebracht sind, wobei jeder der Primärstrahler den Subreflektor optimal ausleuchtet, und dass die geometrische Anordnung der einzelnen Bestandteile der gesamten, mehrere Primärstrahler enthaltenden und damit voneinander abweichende Trajektorien in der abgetasteten Szene erzeugenden Richtantennenanordnung zur Optimierung der Fokussierung und Gesichtsfeldgröße für alle jeweils einem Primärstrahler zugeordneten Teilsysteme zusammen auf den Szenenabstand ausgelegt ist.

6. Verwendung nach Anspruch 5, **gekennzeichnet durch** eine Abtastordnung zur Erfassung von Teilbildern der Szene **durch** die einzelnen Empfänger bzw. Teilsysteme, wobei die Teilbilder zu einer Gesamtabbildung der gesamten Szene vereinigt werden.

7. Verwendung nach Anspruch 1 und 5, **dadurch gekennzeichnet, dass** in der Auswerteeinrichtung bei Vorhandensein mehrerer Empfänger bzw. Teilsysteme eine Mittelungseinrichtung vorgesehen ist, welche die von diesen Empfängern bzw. Teilsystemen erzeugten Bilder ortsrichtig zu einem endgültigen Bild mittelt.

8. Verwendung nach einem der vorhergehenden Ansprüche, **gekennzeichnet durch** eine externe Kalibrierung über ein oder mehrere Referenzobjekte bekannter Intensität.

9. Verwendung nach einem der Ansprüche 1 bis 7, **gekennzeichnet durch** eine interne Kalibrierung mittels eines Schalters, über den direkt nach der Speiseantenne auf eine oder mehrere Referenzquellen umgeschaltet wird, so dass damit zumindest der meist dominierende Empfängereinfluss erfasst und berücksichtigt wird.

10. Verwendung nach einem der vorhergehenden Ansprüche, **dadurch gekennzeichnet, dass** in der empfangsseitigen Auswerteeinrichtung eine Mittelungseinrichtung vorgesehen ist, in welcher die durch das Bildaufnahmeprinzip erzeugte irreguläre Abtastung und ungleiche Abtastwertedichte in der Szene durch ortsrichtige, gewichtete oder ungewichtete Mittelung auf ein reguläres Raster in Einheiten der räumlichen Auflösungszelle gebracht werden, wie dies auch zur Bildrekonstruktion bzw. -generierung erfolgt.

11. Verwendung nach einem der vorhergehenden Ansprüche, **dadurch gekennzeichnet, dass** als Primärstrahler in der Primärstrahleranordnung (3) ein bzw. mehrere Zweifrequenz- bzw. Mehrfrequenz-Speisehornstrahler vorgesehen sind, die einen simultanen Betrieb bei zwei oder mehreren deutlich unterschiedlichen Betriebsfrequenzen erlauben.

12. Verwendung nach einem der vorhergehenden Ansprüche im Bereich der Erdbeobachtung für bodengestützte Messsysteme zur messtechnischen Erfassung und Abbildung von sich zeitlich schnell verändernden Szenarien über eine lange Dauer, aber auch entweder für eine großflächige Kartierung von Landstrichen für z.B. geophysikalische Zwecke oder Allwetteraufklarung oder als Navigationshilfe bei schlechtem Wetter zur Hinderniswarnung und beim Landeanflug.

13. Verwendung nach einem der Ansprüche 1 bis 11 im Bereich der Erdbeobachtung auf einem Satelliten oder Luftfahrzeug, wobei infolge der gleichmäßigen, die Bewegung der Richtantennenanordnung quer zur optischen Achse ersetzenden Fortbewegung der auf dem Satelliten bzw. Luftfahrzeug angebrachten, zur Erdoberfläche hin ausrichtbaren Richtantennenanordnung nur ein feststehender Hauptreflektor benötigt wird, der deshalb sehr groß bemessen sein kann, was eine hohe räumliche Auflösung ergibt, und mechanisch nicht sehr steif zu sein braucht und daher in Leichtbauweise ausführbar ist.

14. Verwendung nach einem der Ansprüche 1 bis 11 im Bereich der Sicherheitstechnik.

**15.** Verwendung nach Anspruch 14 bei einer Überwachungseinrichtung zum Schutz kritischer Infrastrukturen, z.B. bei einer allwetterfähigen 24h-Überwachung von Außenanlagen, oder bei einem Detektionssystem für optisch verborgene Gegenstände an Portalen oder Zugängen, z.B. zur Personenkontrolle.

**Claims**

**1.** Use of a fully mechanized, movable reflector-type directional antenna array configured as a dual-reflector antenna, for two-dimensional imaging of scenes (13), e.g. of terrain, objects or persons, through continuous microwave scanning by said reflector-type directional antenna array which comprises a rotationally symmetrical main reflector (1), a primary radiator assembly (3) including one or a plurality of primary radiators and being arranged in the symmetry axis of the main reflector, said symmetry axis coinciding with the optical axis (7) of the directional antenna array, and further comprising a rotationally symmetrical subreflector (2) having small dimensions relative to the main reflector, the symmetry axis of said subreflector being inclined relative to the optical axis of the directional antenna array, there being provided

- first drive means (8) operative to cause said subreflector which is inclined relative to the optical axis of the directional antenna array, to rotate in its vertex about the optical axis of the directional antenna array, and second drive means (17, 18) operative to cause a movement of the whole directional antenna array in a direction at least approximately vertical to the direction of the optical axis of the directional antenna array,
- on the receiving side, an evaluation unit for generating an image of the scene from the received microwaves,
- wherein the shape of the main reflector, the shape of the subreflector, the primary radiator (3), the distance between the primary radiator and the subreflector (2) and the distance between the subreflector and the main reflector (1) as focusing parameters for passive or active microwave scanning are attuned to each other in such a manner that, for a given scene distance (R), an optimum focusing and an optimum size of the field of view are obtained,
- wherein the two drive means (8;17,18) are provided to obtain a very high moving speed of the subreflector relative to the moving speed of the whole directional antenna array,
- the focusing parameters and the moving speeds of the two drive means are set in such a manner that a gapless, continuous scanning of the scene (13) is obtained with the aid of a focusing spot (12) moving, at the respective scene distance (R), in a trajectory (22) which is combined from a trajectory (20) resulting from the rotation of the subreflector and a trajectory (21) resulting from the movement of the directional antenna array transversely to the optical axis thereof and which at least approximately has the shape of a twisted cycloid, and
- wherein the evaluation unit provided on the receiving side is configured in such a manner that, in the evaluation unit, as a consequence of the determinability and thus of the knowledge of the trajectories of the focusing spot in the scene, the obtained image data are picked up synchronously with the position and are stored and, online or offline, are unified into an image and are represented or further processed.

**2.** Use according to claim 1, **characterized in that**, for generating the rotary movement of said subreflector (2) having small dimensions relative to the main reflector (1), said first drive means (8) is realized in the form of a fast-rotating miniaturized motor located on the shadow side of the subreflector and thus not in the path of rays.

**3.** Use according to claim 1 or 2, **characterized in that** said second drive means (17,18) is realized in the form of an electromotoric drive with eccentric effect, which drive is operative to impart an oscillating movement to the whole directional antenna array in a direction at least approximately vertical to said optical axis (7) so that, if the amplitude of the deflection is suitable, the second image dimension is obtained.

**4.** Use according to claim 1 or 2, **characterized in that** said second drive means comprises electromotoric drives which are operative to move the whole directional antenna array in two dimensions transversely to the directional antenna array so that the size of the scene can be enlarged, said movements being distinctly slower than the rotary movement of the subreflector (2).

**5.** Use according to one of the preceding claims, **characterized in that**, in case that a plurality of receivers or partial systems are used, their primary radiators in the primary radiator array are in such a manner mounted symmetrically around a central primary radiator arranged in the optical axis and assigned to one of the receivers and respectively partial systems, that each of the primary radiators will optimally illuminate the subreflector, and **in that** the geometric arrangement of the individual components of the whole directional antenna array comprising a plurality of primary radiators and thus generating mutually differing trajectories in the scanned scene, is configured in such a manner that the focusing and the size of the field of view for the totality of the partial systems assigned to respectively one primary radiator is optimized with regard to the scene distance.

6.  Use according to claim 5, **characterized by** a scanning order designed such that individual receivers and respectively partial systems are operative to pick up partial images of the scene which are unified into a total image of the whole scene.

7.  Use according to claim 1 and 5, **characterized in that**, in case that a plurality of receivers and respectively partial systems are provided, an averaging device is arranged in the evaluation unit for a positionally correct averaging of the images generated by these receivers or partial systems into a final image.

8.  Use according to one of the preceding claims, **characterized in that** an external calibration is performed via one or a plurality of reference objects of known intensity.

9.  Use according to one of claims 1 to 7, **characterized in that** an internal calibration is performed by means of a switch via which, directly after the feed antenna, switching is performed onto one or a plurality of reference sources, thereby detecting and taking into consideration at least the mostly dominating influence of the receiver.

10. Use according to one of the preceding claims, **characterized in that** the evaluation unit on the receiver side includes an averaging device in which the irregular scanning and the non-uniform scan value density in the scene, as caused by the image pick-up principle, can be brought, by positionally correct weighted or non-weighted averaging, onto a regular grid in units of the spatial resolution cell, in the same way as this also has to be performed for image reconstruction and image generation, respectively.

11. Use according to one of the preceding claims, **characterized in that** the primary radiator in the primary radiator array (3) is provided in the form of one and respectively a plurality of dual-frequency and respectively multifrequency feed horn radiators which allow for simultaneous operation with two or more distinctly different operational frequencies.

12. Use of one of the preceding claims in the field of earth observation for use in ground-based measuring systems for long-term detecting and imaging, by use of measurement technology, of scenes undergoing fast changes over time, but also either for large-area cartographic mapping of terrains, e.g. for geophysical purposes or all-weather reconnaissance, or as a navigation aid in bad weather for obstacle warning and during approach for landing.

13. Use according to one of claims 1 to 11 in the field of earth observation for use on a satellite or aircraft, wherein, as a consequence of the uniform movement of the directional antenna array, replacing the movement of the directional antenna array transversely to the optical axis, with the directional antenna array arranged on the satellite or aircraft and being adapted to be oriented towards the surface of the earth, only one fixed main reflector is required which consequently is allowed to have a very large size, resulting in a high spatial resolution, and which does not need to have high mechanical stiffness and thus can be of a light-weighted construction.

14. Use according to one of claims 1 to 11 in the field of safety technology.

15. Use according to claim 14 in a monitoring system for protection of critical infrastructures, e.g. in all-weather 24-h monitoring of external plants or in a detection system provided for detecting visually hidden objects at portals or entrances, e.g. for safety checks performed on persons.

**Revendications**

1.  Utilisation d'une structure d'antenne directive à réflecteur, mobile, entièrement mécanique, constituée par une antenne à deux réflecteurs, destinée à la représentation bidimensionnelle de scènes (13), par exemple de terrains, d'objets ou de personnes, par une analyse continue en hyperfréquences effectuée au moyen de la structure d'antenne directive à réflecteur, qui est composée d'un réflecteur principal à symétrie de révolution (1), d'une structure d'élément actif d'antenne (3) qui est composée d'un ou de plusieurs éléments actifs d'antenne, et est disposée dans l'axe de symétrie du réflecteur principal qui coïncide avec l'axe optique de la structure d'antenne directive, et d'un réflecteur secondaire (2) à symétrie de révolution, de petites dimensions par rapport au réflecteur principal, et dont l'axe de symétrie est incliné par rapport à l'axe optique de la structure d'antenne directive, utilisation dans laquelle

- des premiers moyens d'entraînement (8) sont prévus pour exercer une rotation du réflecteur secondaire, incliné par rapport à l'axe optique de la structure d'antenne directive, sur son sommet autour de l'axe optique de la structure d'antenne directive, et des deuxièmes moyens d'entraînement (17, 18) sont prévus pour exercer un mouvement de l'ensemble de la structure d'antenne directive dans une direction s'étendant au moins à peu près perpendiculairement à la direction de l'axe optique de la structure d'antenne directive,
- sur le côté réception, il est prévu un dispositif d'exploitation destiné à créer une image de la scène à partir des hyperfréquences reçues,
- la forme du réflecteur principal, la forme du réflecteur secondaire, l'élément actif d'antenne (3), la distance entre l'élément actif d'antenne et le réflecteur secondaire (2) et la distance entre le réflecteur secondaire et le réflecteur principal (1) sont accordés, en tant que paramètres de focalisation dans une analyse à hyperfréquence passive ou active, pour obtenir une focalisation et une taille de champ optique optimales pour une distance à la scène donnée,
- les deux moyens d'entraînement (8 ; 17, 18) sont prévus pour obtenir une très grande vitesse de mouvement du réflecteur secondaire par rapport à la vitesse de mouvement de l'ensemble de la structure d'antenne directive,
- les paramètres de focalisation et les vitesses de mouvement des deux moyens d'entraînement utilisés pour le balayage continu et sans lacunes de la scène (13) décrivent une tache de focalisation (12) qui se déplace pour la distance respective de la scène (R) sur une trajectoire (22) qui est une combinaison d'une trajectoire (20) résultant de la rotation du réflecteur secondaire et d'une trajectoire (21) résultant du mouvement de la structure d'antenne directive transversalement à son axe optique, et qui présente au moins approximativement la forme d'une cycloïde entrelacée, et
- le dispositif d'exploitation côté réception reçoit les données d'image obtenues, grâce à la possibilité de détermination et de ce fait à la connaissance de la trajectoire de la tache de focalisation dans la scène, synchronisées avec la position, les mémorise, les réunit et les représente ou les traite en une image en ligne ou hors ligne.

2. Utilisation selon la revendication 1, **caractérisée en ce que** le premier moyen d'entraînement (8) servant à la production du mouvement de rotation du réflecteur secondaire (2), qui est petit par rapport au réflecteur principal (1), est constitué par un mini-moteur à grande vitesse de rotation placé sur le côté occultation du réflecteur secondaire et ne se trouvant donc pas sur le trajet des rayons.

3. Utilisation selon la revendication 1 ou 2, **caractérisée en ce que** le deuxième moyen d'entraînement (17, 18) est constitué par un entraînement à moteur électrique à effet excentrique, qui met l'ensemble de la structure d'antenne directive en mouvement oscillant dans une direction au moins approximativement perpendiculaire à l'axe optique (7), de sorte qu'avec une amplitude appropriée de l'excursion, on obtient la deuxième dimension d'images.

4. Utilisation selon la revendication 1 ou 2, **caractérisée en ce que** le deuxième moyen d'entraînement est constitué par des entraînements à moteur électrique au moyen desquels l'ensemble de la structure d'antenne directive peut être déplacé dans deux dimensions transversalement à l'axe optique de la structure d'antenne directive, de sorte que la dimension de la scène peut être élargie, ces mouvements étant beaucoup plus lents que le mouvement de rotation du réflecteur secondaire (2).

5. Utilisation selon l'une des revendications précédentes, **caractérisée en ce que**, dans le cas d'une utilisation de plusieurs récepteurs ou systèmes partiels, leurs éléments actifs d'antenne dans la structure d'éléments actifs d'antenne sont disposés symétriquement autour d'un élément actif d'antenne placé sur l'axe optique, central et associé à un des récepteurs ou systèmes partiels, chacun des éléments actifs d'antenne éclairant alors le réflecteur secondaire de façon optimale, et **en ce que** la disposition géométrique des différents composants de l'ensemble de la structure d'antenne directive, qui comprend plusieurs éléments actifs d'antenne et produit donc des trajectoires différentes les unes des autres dans la scène balayée, est établie en fonction de la distance à la scène afin d'optimiser la focalisation et la taille de champ optique pour tous les systèmes partiels associés respectivement à un élément actif d'antenne.

6. Utilisation selon la revendication 5, **caractérisée par** un dispositif d'analyse destiné à acquérir des images partielles de la scène par les différents récepteurs ou systèmes partiels, les images partielles étant réunies pour donner une représentation complète de toute la scène.

7. Utilisation selon les revendications 1 et 5, **caractérisée en ce que**, dans le dispositif d'exploitation, dans le cas de plusieurs récepteurs ou systèmes partiels, il est prévu un dispositif de formation de moyenne qui transforme les images produites par ces récepteurs ou systèmes partiels en une image définitive conforme au lieu.

**8.** Utilisation selon l'une des revendications précédentes, **caractérisée par** un étalonnage externe exécuté via un ou plusieurs objets de référence d'intensité connue.

**9.** Utilisation selon l'une des revendications 1 à 7, **caractérisée par** un étalonnage interne exécuté au moyen d'un commutateur par l'intermédiaire duquel on commute directement, selon l'antenne-source, sur une ou plusieurs sources de référence, de sorte que, de cette façon, l'influence de récepteur qui est la plus dominante est saisie et prise en considération.

**10.** Utilisation selon l'une des revendications précédentes, **caractérisée en ce que**, dans le dispositif exploitation côté réception, est prévu un dispositif de formation de moyenne dans lequel le balayage irrégulier produit par le principe de prise d'images et la densité irrégulière des valeurs de balayage dans la scène sont transformées, par une formation de moyenne conforme au lieu, pondérée ou non pondérée, sur une grille régulière, en unités de cellules de résolution dans l'espace, comme cela se produit aussi pour la reconstruction ou la production d'images.

**11.** Utilisation selon l'une des revendications précédentes, **caractérisée en ce qu'**il est prévu, comme éléments actifs d'antenne dans la structure d'éléments actifs d'antenne (3), une ou plusieurs antennes-cornet source à deux fréquences ou plus, qui permettent un fonctionnement simultané dans le cas de deux fréquences de fonctionnement nettement différentes ou plus de deux fréquences de fonctionnement.

**12.** Utilisation selon l'une des revendications précédentes dans le domaine de l'observation terrestre pour des systèmes de mesure depuis le sol destinés à l'acquisition et à la représentation par des techniques de mesure de scénarios à variation rapide dans le temps sur une longue durée, mais aussi soit pour la cartographie de grandes étendues de bandes de terre par exemple pour des applications géophysiques soit pour des reconnaissances tous temps soit comme aide à la navigation par mauvais temps pour avertir de la présence d'obstacles, soit encore pour l'atterrissage.

**13.** Utilisation selon l'une des revendications 1 à 11 dans le domaine de l'observation terrestre par satellite ou véhicule aérien dans lequel, du fait de l'avance régulière de la structure d'antenne directive montée à bord du satellite ou du véhicule aérien et qui peut être pointée vers la surface terrestre, avance qui remplace le mouvement de la structure d'antenne directive transversalement à l'axe optique, il suffit d'un seul réflecteur principal fixe, qui peut de cette façon être de très grande dimension, ce qui donne une haute résolution dans l'espace, ne demande pas à être très rigide mécaniquement et peut donc être réalisé dans une construction légère.

**14.** Utilisation selon l'une des revendications 1 à 11 dans le domaine de la technique de sécurité.

**15.** Utilisation selon la revendication 14 dans un dispositif de surveillance destiné à la protection d'infrastructures critiques, par exemple dans le cadre d'une surveillance tous temps et 24 heures sur 24 d'installations extérieures et/ou dans un système de détection pour objets dissimulés optiquement au niveau de portails ou d'accès, par exemple pour le contrôle des personnes.

Fig.1

Momentaner Ausleuchtbereich 9

Momentaner Auftreffpunkt des Zentralstrahls 11

Trajektorie des Zentralstrahls 10

Subreflektor 2

Hauptreflektor 1

Halterungen

Fig.2

EP 2 099 095 B1

Trajektorie des Fokusflecks
im Szenenabstand R
für $\omega_S \neq 0$ und $\omega_H = 0$

Fokusfleck
**12**

**20**

Fokusfleck
**12**

**21**

Trajektorie des Fokusflecks
im Szenenabstand R
für $\omega_S = 0$ und $\omega_H \neq 0$

Kombination beider
Trajektorien

Trajektorie des Fokusflecks
im Szenenabstand R
für $\omega_S \neq 0$ und $\omega_H \neq 0$

**12**

**22**

Fig.3

β>>0

β≈0

β>>0

Fig.4

Fig.5

Fig.6

EP 2 099 095 B1

Fig.7

Fig.8

Fig.9

x-Koordinate Across-track [km]

Fig.10

x-Koordinate Across-track [km]

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2005085903 A1
- WO 2005017559 A2
- US 6943742 B2

- WO 2007028472 A1
- EP 0514886 A1
- EP 0002982 A1

### In der Beschreibung aufgeführte Nicht-Patentliteratur

- **MARTIN C.A. et al.** High-resolution passive millimeter-wave security screening using few amplifiers. *SPIE Defense & Security Symposium, Passive MMW Imaging Technology X, Orlando, FL, USA, 09.-13. April 2007, Proceedings of the SPIE,* 09. April 2007, vol. 6548, 654806